# EUROPÄISCHE PATENTSCHRIFT

(11) **EP 2 552 777 B1**
(45) Veröffentlichungstag und Bekanntmachung des Hinweises auf die Patenterteilung: **05.03.2014**
(21) Anmeldenummer: 11711084.1
(22) Anmeldetag: 28.03.2011
(51) Int. Cl.: B64D 11/00

(54) **SCHLOSS FüR EINE MIT EINEM DECKEL VERSCHLIEßBARE GEPÄCKBOX**
LOCK FOR A LUGGAGE BOX WHICH CAN BE CLOSED BY A LID
SERRURE POUR COFFRE À BAGAGES POUVANT ÊTRE FERMÉ PAR UN COUVERCLE

(30) Priorität: 01.04.2010 DE 102010016313
(43) Veröffentlichungstag der Anmeldung: 06.02.2013
(73) Patentinhaber: SFS Intec Holding AG, 9435 Heerbrugg (CH)
(72) Erfinder: SCHENDEL, Olav, 70567 Stuttgart (DE)
(86) Internationale Anmeldenummer: PCT/EP2011/054725
(87) Internationale Veröffentlichungsnummer: WO 2011/120918

(56) Entgegenhaltungen:
- WO-A2-2010/004039
- DE-U1- 9 109 406

## Beschreibung

Die Erfindung betrifft ein Schloss für eine Gepäckbox, insbesondere in der Kabine eines Flugzeuges, wobei die Gepäckbox mit einem Deckel verschließbar ist, der um eine Drehachse beweglich ist, mit einem Fallenträger, der wenigstens eine Hauptfalle trägt, mit einem Verschlussgehäuse zum Erfassen von wenigstens der Hauptfalle zur Verriegelung des Schlosses, wobei von der Gepäckbox und dem Deckel eine oder einer den Fallenträger und der oder die andere das Verschlussgehäuse empfängt oder trägt, und mit einem mit dem Schloss verbindbaren oder verbundenen, manuell betätigbaren Betätigungsmechanismus zum Lösen der Hauptfalle aus dem Verschlussgehäuse zur Entriegelung des Schlosses, wobei die Hauptfalle in dem Fallenträger schwenkbar gelagert ist und in verriegelter Stellung des Schlosses in eine Sperraufnahme des Verschlussgehäuses einfasst und an einer Hauptschließfläche derselben anliegt, wobei an dem Fallenträger weitere eine Nebenfalle gelagert ist, welche in verriegelter Stellung des Schlosses durch eine an dem Verschlussgehäuse ausgebildete Nebenschließfläche auch in einer gegenüber der Hauptschließfläche mehr oder weniger korrekten Verriegelungsposition blockierbar ist, und wobei die Hauptfalle in der Sperraufnahme des Verschlussgehäuses formschlüssig schließt, hingegen die Nebenfalle mit einem Spalt.

Die Hauptfunktion eines ähnlichen Schlosses, das zum firmeninternen Stand der Technik der Anmelderin gehört, im Einsatz bei einem Flugzeug ist es, den Deckel oder die Gepäckwanne oder -schütte einer Gepäckbox bei allen Flugbedingungen einschließlich Notlandebedingungen sicher zu verriegeln und zu entriegeln. Die Antriebseinrichtung innerhalb des Schlosses ist durch ein mechanisches Verbindungsglied mit einem Bedienungsknopf oder -griff verbunden, der an dem Deckel so angebracht ist, dass er von außerhalb der Gepäckbox betätigbar ist. Die Betätigung des Knopfes oder Griffes führt bei dem ähnlichen Schloss zu einer Drehbewegung des mechanischen Verbindungsgliedes, durch die das Schloss entriegelt wird. Das Schloss ist dabei so ausgebildet, dass ein unabsichtliches Öffnen im belasteten oder entlasteten Zustand der Gepäckbox verhindert wird. In der Luftfahrtechnik wird verlangt, dass die Falle des Schlosses eine Fail-Safe-Funktion hat. Diesem Zweck dient eine doppelte Verriegelung. Diese doppelte Verriegelung geschieht bei dem ähnlichen Schloss zum einen durch einen Schließbolzen, der durch einen Schließhaken erfasst wird, und zum anderen durch einen Sperrstift, der bei geöffnetem Deckel der Gepäckbox aus der Falle hervorschaut, bei dem Schließen des Deckels der Gepäckbox aber durch die Schließbolzeneinrichtung in das Gehäuse der Falle hinein gedrückt wird. Sowohl der Schließbolzen als auch der Sperrstift sind jeweils für sich in der Lage, die erforderlichen Belastungen zu tragen.

Problematisch ist bei dem Schließmechanismus dieses ähnlichen Schlosses, dass von dem mittig an dem Deckel angebrachten Schwenkgriff aus zwei Schlösser betätigt werden müssen, die an dem einen bzw. anderen Ende des Deckels angeordnet sind, wofür der Schwenkgriff und die beiden Wellen sowie die beiden Fallen auf einer Achse montiert sein müssen. Der Schwenkgriff macht eine rotatorische Bewegung, die über die Wellen zu den Fallen der Schlösser übertragen wird. In den Fallen wird die rotatorische Bewegung jeweils in eine Schwenkbewegung der Schließhaken umgesetzt. Davon völlig unabhängig wird der Sperrstift jedes Schlosses in seine Verriegelungsstellung gebracht, indem der Deckel geschlossen wird. Die Schließbolzeneinrichtung drückt den sich an ihr vorbei bewegenden Sperrstift in das Gehäuse der Falle hinein. In Fällen, in denen die Schlösser und der Schwenkgriff nicht auf einer Achse montiert werden können, ist das ähnliche Schloss überhaupt nicht einsetzbar. Weiter ist problematisch, dass die für die Betätigung des ähnlichen Schlosses erforderliche Konstruktion der Wellen und deren Anbringung an dem Deckel zusätzliches Gewicht, erhöhte Bauteilkosten und einen erhöhten Montageaufwand mit sich bringt, was alles insgesamt in der Luftfahrtechnik äußerst unerwünscht ist. Schließlich ist bei dem ähnlichen Schloss die Schließbolzeneinrichtung in zwei Achsen einstellbar. Der Schließbolzen dient gleichzeitig als Anschlag für einen Endstop. Das ist mit dem Nachteil verbunden, dass sich bei jeder Justage der Schließbolzeneinrichtung auch der Anschlag des Endstops verstellt und nachgestellt werden muss. Überdies erfolgt das Öffnen des Schlosses durch Ziehen am Betätigungsgriff. Da aber zwischen Betätigungsgriff und Welle kein Getriebe vorhanden ist, ist eine höhere Bedienkraft erforderlich.

Ein Schloss der im Oberbegriff des Patentanspruchs 1 angegebenen Art ist aus der WO 2010/004 039 A2 bekannt. Es ist dort Teil einer Gepäckablage. Diese Druckschrift befasst sich nämlich damit, eine Gepäckablage für ein Passagierflugzeug derart auszuführen, dass sie schnell, funktionssicher und mit geringem Kraftaufwand geöffnet und geschlossen werden kann. Zu diesem Zweck hat die bekannte Gepäckablage eine Verriegelungseinrichtung, welche an jeder Seite der Gepäckablage ein Schloss der im Oberbegriff des Patentanspruchs 1 angegebenen Art umfasst. Um zu gewährleisten, dass die Gepäckablage schnell, funktionssicher und mit geringem Kraftaufwand geöffnet und geschlossen werden kann, ist vorgesehen, dass das Schloss einen Sicherungshebel aufweist, welcher mit dem einen Ende eines Zugelementes verbunden ist, dessen anderes Ende mit einem Handgriff wirkverbunden ist, und welcher mit zwei Rasthebeln über eine Gelenkverbindung verbunden ist, welche zwischen diesen Gelenkverbindungen eine Rastrolle tragen, welche mit einer Rastvertiefung am Haltelement in Eingriff bringbar ist, wobei sowohl die Rasthebel als auch der Sicherungshebel in Richtung der Riegelstellung federbeaufschlagt sind und wobei der Sicherungshebel in der Riegelstellung am Gehäuse derart verhakt oder abgestützt ist, dass die Verhakung durch Zug am Zugelement aufhebbar ist. Problematisch ist bei der bekannten Gepäckablage, dass die Hauptfalle und die Nebenfalle aneinander und an ein und demselben Fallenträger schwenkbar gelagert sind. Das Erreichen der Raststellung beider Rasthebel kann beeinträchtigt werden, wenn einer derselben die Raststellung nicht erreichen kann. Die Nebenfalle schließt zwar mit einem Spalt, die Betätigung des Schlosses wird dadurch aber nicht erleichtert.

Aufgabe der Erfindung ist es, ein Schloss der im Oberbegriff des Patentanspruchs 1 angegebenen Art so auszubilden, dass die Haupt- und Nebenfalle ihre Funktionen sicherer erfüllen können und gleichzeitig die Betätigbarkeit des Schlosses erleichtert wird.

Diese Aufgabe ist bei einem Schloss der eingangs genannten Art erfindungsgemäß dadurch gelöst, dass die Nebenfalle in dem Fallenträger verschiebbar gelagert ist und in dem Verschlussgehäuse mit einem umlaufenden Spalt schließt und dass der Nebenfalle eine Wippe mit einem Dorn zugeordnet ist, der in entriegeltem Zustand des Schlosses in eine Ausnehmung in der Nebenfalle eingreift, so dass in dem entriegelten Zustand des Schlosses die Nebenfalle formschlüssig in dem Fallenträger zurückgehalten wird, andererseits aber bei dem Schließen der Gepäckbox die Wippe zwangsläufig durch das Verschlussgehäuse betätigt und somit die Nebenfalle entriegelt wird, aber erst dann, wenn sich das Verschlussgehäuse und der Fallenträger in einer Position zueinander befinden, in der beide Fallen verriegeln können.

Das Schloss nach der Erfindung ist wie das ähnliche Schloss durch einen Seilzug entriegelbar, der unsichtbar innerhalb des Deckels (Gepäckwanne oder-schütte) oder innerhalb des Behälters verlegt ist. Die Verwendung eines leichten Seilzuges bringt einen Gewichtsvorteil mit sich. Die Montage ist unkompliziert, weil sich Seilzüge viel günstiger als Wellen und Hebel aus GFK montieren lassen. Zu dem geringeren Gewicht und dem geringeren Montageaufwand kommen noch geringere Bauteilkosten hinzu. Ein Vorteil ist, dass die Falle und die zur Betätigung eingesetzte Drucktaste nicht auf einer gemeinsamen Achse montiert werden müssen. Die Fail-Safe-Funktion ist dadurch gewährleistet, dass das Schloss eine Hauptfalle und eine Nebenfalle hat und dass jede Falle mit einem Verschlussgehäuse in Eingriff kommt, so dass, wenn eine der Fallen versagen sollte, die andere Falle und das Verschlussgehäuse die gesamte Last aufnehmen können. Bei dem Schloss nach der Erfindung schließt die Hauptfalle an der Sperraufnahme des Verschlussgehäuses formschlüssig, hingegen die Nebenfalle mit umlaufendem Spalt, so dass in dem entriegelten Zustand des Schlosses die Nebenfalle formschlüssig in dem Fallenträger zurückgehalten wird, andererseits aber bei dem Schließen der Gepäckbox die Wippe zwangsläufig durch das Verschlussgehäuse betätigt und somit die Nebenfalle entriegelt wird, aber erst dann, wenn sich das Verschlussgehäuse und der Fallenträger in einer Position zueinander befinden, in der beide Fallen verriegeln können. Falls die Hauptfalle versagt, kann der Deckel sich nur um die Breite des umlaufenden Spalts bewegen und bleibt somit geschlossen. Weiter ist bei dem Schloss nach der Erfindung der Nebenfalle eine Wippe mit einem Dorn zugeordnet, der in entriegeltem Zustand des Schlosses in eine Ausnehmung in der Nebenfalle eingreift. Dieser Aufbau gewährleistet, dass in dem entriegelten Zustand des Schlosses die Nebenfalle formschlüssig in dem Fallenträger zurückgehalten wird, andererseits aber bei dem Schließen der Gepäckbox die Wippe zwangsläufig durch das Verschlussgehäuse betätigt und somit die Nebenfalle entriegelt wird, aber erst dann, wenn sich das Verschlussgehäuse und der Fallenträger in einer Position zueinander befinden, in der beide Fallen verriegeln können.

Bei dem Schloss nach der Erfindung ist die Hauptfalle in dem Fallenträger verschwenkbar gelagert, hingegen die Nebenfalle in dem Fallenträger verschiebbar gelagert, wobei die Verschiebung der Nebenfalle unabhängig von der Verschwenkung der Hauptfalle erfolgen kann. Das erhöht die Funktionssicherheit des Schlosses nach der Erfindung. Dadurch, dass bei dem Schloss nach der Erfindung die Nebenfalle in korrekt verriegelter Position Abstand von dem Verschlussgehäuse hat, so dass ein umlaufender Spalt, also (eine berührungslose) formschlüssige Verbindung vorhanden ist, können so durch verminderte Reibung die Bedienkräfte gering gehalten werden. Das Schloss gilt erst als vollständig verriegelt, wenn beide Fallen in Verriegelungsposition sind. Wenn jetzt z.B. die Hauptfalle versagt, kann der Deckel sich nur um die Breite des Spalts zwischen der Nebenfalle und dem Verschlussgehäuse bewegen, also bis die Nebenfalle an der Nebenschließfläche anliegt. Der Deckel bleibt so trotz Versagens der Hauptfalle geschlossen.

Das Schloss nach der Erfindung wird bei einem Behälter oder einer Gepäckbox verwendet, dessen/deren Deckel um eine Drehachse beweglich ist. Das ist zum Beispiel der Fall, wenn es sich bei dem Behälter mit Deckel um eine Gepäckbox eines Flugzeuges handelt, die üblicherweise in der Kabine oben montiert ist und die sich öffnen lässt, indem die an dem Deckel der Gepäckbox angebrachte Drucktaste betätigt wird. Dadurch wird das Schloss entriegelt und der durch sein Eigengewicht und üblicherweise durch Gepäck belastete Deckel klappt dann nach unten. Das Schloss nach der Erfindung ist aber ebenso bei einer Gepäckbox verwendbar, bei welcher nach Betätigung der stationär an dem Behälter angebrachten Drucktaste der Deckel nach oben schwenkt. Der Anbringungsort des Fallenträgers und des Verschlussgehäuses, entweder am Behälter oder am Deckel, wird je nach Einssatzzweck passend gewählt. Auf den Aufbau des Schlosses nach der Erfindung hat das keinen Einfluss.

Vorteilhafte Ausgestaltungen des Schlosses nach der Erfindung bilden die Gegenstände der Unteransprüche.

In einer Ausgestaltung des Schlosses nach der Erfindung sind durch Betätigen einer Notentriegelungseinrichtung die Hauptfalle und die Nebenfalle in Stellungen verschiebbar, in denen das Schloss entriegelt ist. Dadurch ist die zusätzliche Möglichkeit gegeben, das Schloss nach der Erfindung im Notfall manuell, genauer gesagt, nicht durch den Betätigungsmechanismus, zu entriegeln, wobei die Hauptfalle und die Nebenfalle zwangsläufig beide gemeinsam manuell in ihre Entriegelungsstellung bewegt werden.

In einer weiteren Ausgestaltung des Schlosses nach der Erfindung sind die Hauptfalle und die Nebenfalle durch Federn in Richtung von Stellungen vorgespannt, in denen das Schloss verriegelt ist. Die Federn gewährleisten, dass bei einer Funktionsstörung des Schlosses das Schloss trotzdem sicher verriegelt werden kann. Die Federn sind die Antriebselemente des gesamten Systems. Sie bringen die Fallen in Schließposition.

In einer weiteren Ausgestaltung des Schlosses nach der Erfindung weist zum manuellen Entriegeln des Schlosses der Betätigungsmechanismus einen Seilzug auf, der mit der Hauptfalle und der Nebenfalle koppelbar oder gekoppelt ist. Dadurch ist gewährleistet, dass, zum gewünschten Entriegeln des Schlosses immer beide Fallen gleichzeitig aus der Sperraufnahme gelöst werden.

In einer weiteren Ausgestaltung der Erfindung ist der Seilzug auf der von dem Schloss oder von jedem Schloss des Behälters abgewandten Seite mit einer Drucktaste verbunden, an deren Stellung der Ent- oder Verriegelungszustand des oder jedes Schlosses des Behälters erkennbar ist. Es kann zum Beispiel bei einer Gepäckbox eines Flugzeuges passieren, dass aufgrund von Überladung oder einseitiger Belastung der Deckel (Schütte) eines üblicherweise zwei Schlösser aufweisenden Behälters in sich verdreht oder verwunden wird. Das kann dann zur Folge haben, dass eines der Schlösser nicht vollständig schließt. Das ist anschließend an der Stellung der Drucktaste erkennbar, z.B. durch einen noch sichtbaren roten Hintergrund der in ihrem Drucktastengehäuse in gedrückter Position verharrenden Drucktaste.

In einer weiteren Ausgestaltung der Erfindung ist zwischen jedem Schloss des Behälters und der Drucktaste ein Freilaufmechanismus anbringbar oder angebracht. Die Drucktaste wird durch den Sperrmechanismus aus Wippe und Dorn im Fallenträger gedrückt gehalten. Der Freilaufmechanismus entkoppelt die beiden Schlösser des Behälters, die durch die Seilzüge mit einer Drucktaste verbunden sind, und ermöglicht so ein einseitiges Schließen. Die Drucktaste bleibt solange gesperrt, bis beide Schlösser vollständig eingerastet sind. Diese Ausgestaltung des Schlosses ermöglicht eine getrennte Abfrage der an dem Behälter vorhandenen Schlösser. Die Drucktaste zeigt durch ihre gedrückte Position solange mindestens ein entriegeltes Schloss an, bis alle Schlösser des Behälters vollständig verriegelt sind.

Ausführungsbeispiele der Erfindung werden im Folgenden unter Bezugnahme auf die Zeichnungen näher beschrieben. Es zeigen
- Fig. 1: im Schnitt und in Draufsicht eine bevorzugte Ausführungsform des Schlosses nach der Erfindung, wobei zusätzlich ein Betätigungsmechanismus zum Entriegeln des Schlosses gezeigt ist,
- Fig. 1a: eine Drucktaste des Betätigungsmechanismus im Schnitt nach der Linie la-la in Fig. 1,
- Fig. 2: als eine vergrößerte Einzelheit das Schloss in entriegeltem Zustand,
- Fig. 3a - 3c: das Schloss in drei Zuständen, und zwar in Fig. 3a in entriegeltem Zustand, in Fig. 3b im verriegelten Zustand und in Fig. 3c in einem Notentriegelungszustand, wobei in Fig. 3 jeweils Betätigungsfedern angedeutet sind, die in den übri- gen Darstellungen der Übersichtlichkeit halber weggelassen worden sind,
- Fig. 4: als eine vergrößerte Einzelheit das Schloss nach der Erfindung in dem verriegelten Zustand in Fig. 4a, zusammen mit einer Drucktaste in Draufsicht in Fig. 4b, und die Drucktaste im Querschnitt in Fig. 4c,
- Fig. 5: als eine vergrößerte Einzelheit das Schloss nach der Erfindung in dem notentriegelten Zustand in Fig. 5a, zusammen mit einer Drucktaste in Draufsicht in Fig. 5b, und die Drucktaste im Querschnitt in Fig. 5c,
- Fig. 6a, 6b: einen Fallenträger des Schlosses nach der Erfindung in Entriegelungsstellung bzw. Verriegelungsstellung einer Hauptfalle,
- Fig. 7: den Fallenträger nach Fig. 6 in einer Ansicht, die eine Zahnplatte zur Justierung des Fallenträgers veranschaulicht,
- Fig. 8: den Fallenträger und die Hauptfalle in der verriegelten Stellung nach Fig. 6b, wobei zusätzlich eine Sperraufnahme gezeigt ist, an der die Hauptfalle formschlüssig verriegelt ist,
- Fig. 9a: als eine Einzelheit und in perspektivischer Darstellung ein Verschlussgehäuse des Schlosses nach der Erfindung,
- Fig. 9b: das Verschlussgehäuse nach Fig. 9a, jedoch im Notentriegelungszustand,
- Fig. 9c: eine Rückansicht des Verschlussgehäuses nach Fig. 9a,
- Fig. 9d: eine Rückansicht des Verschlussgehäuses nach Fig. 9b,
- Fig. 10: eine schematische Seitenansicht einer Gepäckbox eines Flugzeuges und
- Fig. 11 und 12: als eine Einzelheit einen Freilauf in zwei Betriebsphasen.

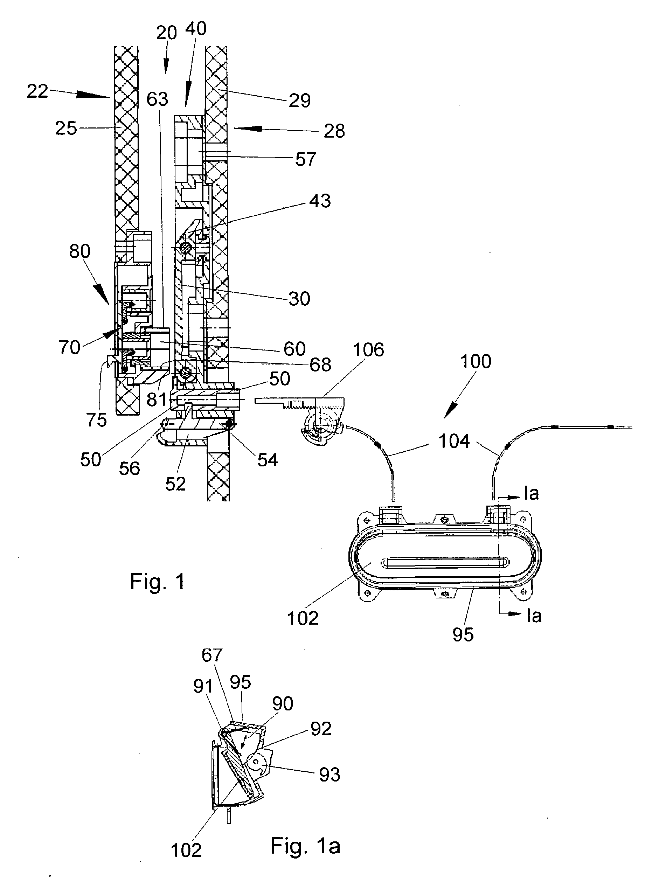

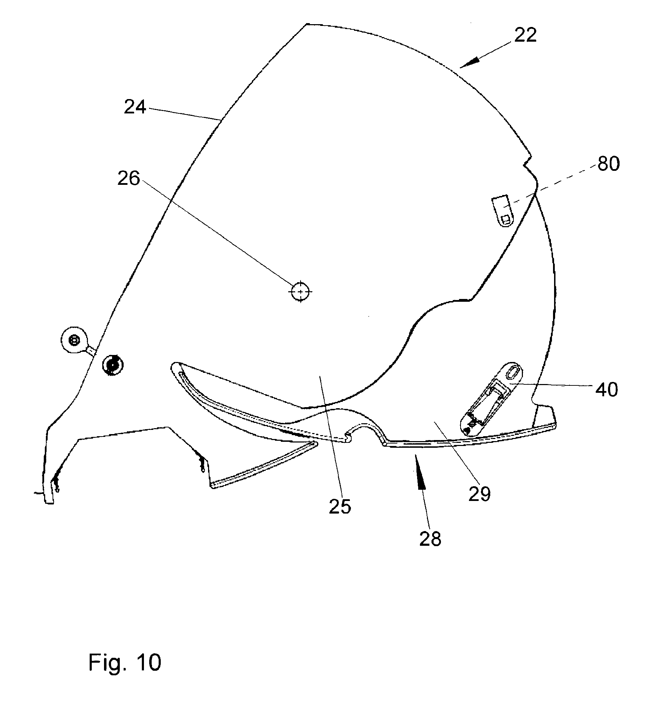

Fig. 1 zeigt ein Ausführungsbeispiel eines Schlosses nach der Erfindung, das insgesamt mit 20 bezeichnet ist. Dem Schloss 20 ist ein insgesamt mit 100 bezeichneter Betätigungsmechanismus zugeordnet. Das Schloss 20 ist ein Doppelfallenschloss. Es umfasst eine Hauptfalle 30 und eine Nebenfalle 50. Die Hauptfalle 30 und die Nebenfalle 50 sind an einem insgesamt mit 40 bezeichneten Fallenträger gelagert. Die beiden Fallen 30 und 50 sind zum Eingriff in eine Sperraufnahme 60 an einem Verschluss- oder Keepergehäuse 80 ausgebildet. Das Schloss 20 ist zwar vorzugsweise für den Einsatz bei einer in der Kabine eines Flugzeuges oben montierten Gepäckbox 22 bestimmt, von welcher ein Beispiel in Fig. 10 in einer schematischen Seitenansicht gezeigt ist, es ist jedoch allgemein bei Behältern mit Deckeln einsetzbar.

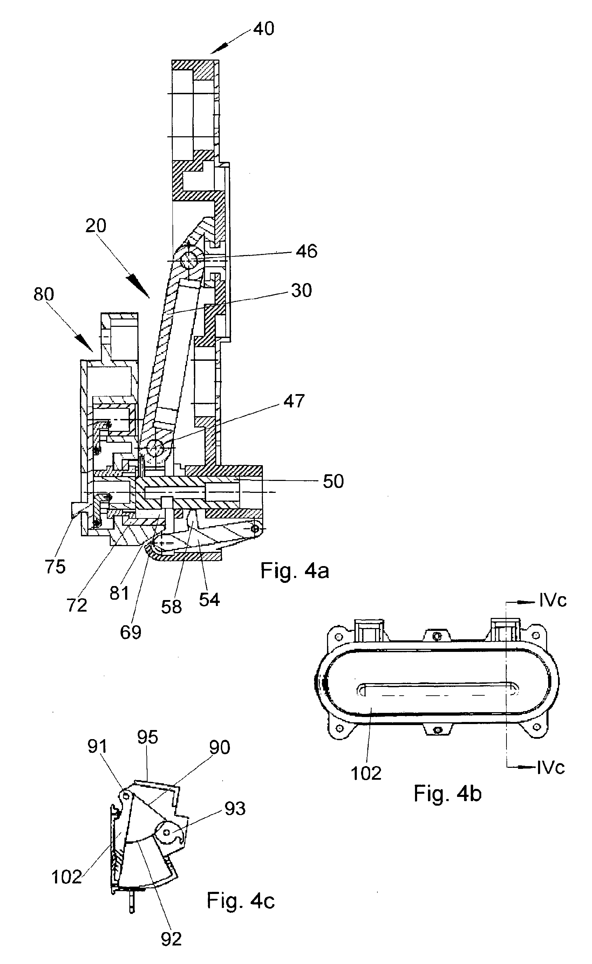

Gemäß der Darstellung in Fig. 10 hat die Gepäckbox 22 einen stationären Behälter 24, der in der Kabine eines Flugzeuges oben montiert ist. Der Behälter 24 weist einen um eine Drehachse 26 beweglichen Deckel 28 auf. In dem gezeigten Ausführungsbeispiel ist der Deckel 28 eine zum Öffnen nach unten schwenkende Gepäckwanne oder -schütte. Der Fallenträger 40 des Schlosses 20 ist an einer der Seitenwand 25 des Behälters 24 benachbarten Seitenwand 29 des Deckels 28 angebracht, und zwar so, dass bei dem Hochschwenken des Deckels 28 der Fallenträger 40 mit dem Verschlussgehäuse 80 in Deckung gebracht wird. An einem nicht dargestellten entgegengesetzten Ende der Gepäckbox 22 ist ein identisch ausgebildetes weiteres Schloss 20 angebracht, das durch denselben Betätigungsmechanismus 100 entriegelbar ist. Die Betätigung des Schlosses 20 zu dessen Entriegelung erfolgt gemäß der Darstellung in Fig. 1 durch eine Drucktaste 102, die über Seilzüge 104 und Freiläufe 106, von denen einer in Fig. 1 gezeigt ist, mit den Fallen 30, 50 jedes der beiden Schlösser 20 verbunden ist. Wenn der Deckel 28 aus der in Fig. 10 gezeigten Stellung, in welcher das Schloss 20 entriegelt ist, nach oben geschwenkt wird, kommen die Fallen 30 und 50 und das Verschlussgehäuse 80 miteinander in Eingriff, wodurch das Schloss 20 verriegelt wird. Die verriegelte Stellung des Schlosses 20 ist z.B. in Fig. 4a gezeigt. Durch Betätigung der Drucktaste 102 wird jedes Schloss 20 wieder entriegelt, woraufhin sich dann der Deckel 28 unter seinem Eigengewicht oder belastet durch Gepäck nach unten in die in Fig. 10 gezeigte Stellung bewegen kann. Die Seilzüge 104 sind mit den Schlössern 20 über die Freiläufe 106 verbunden. Die Funktion und der Aufbau der Freiläufe 106 sind weiter unten näher beschrieben.

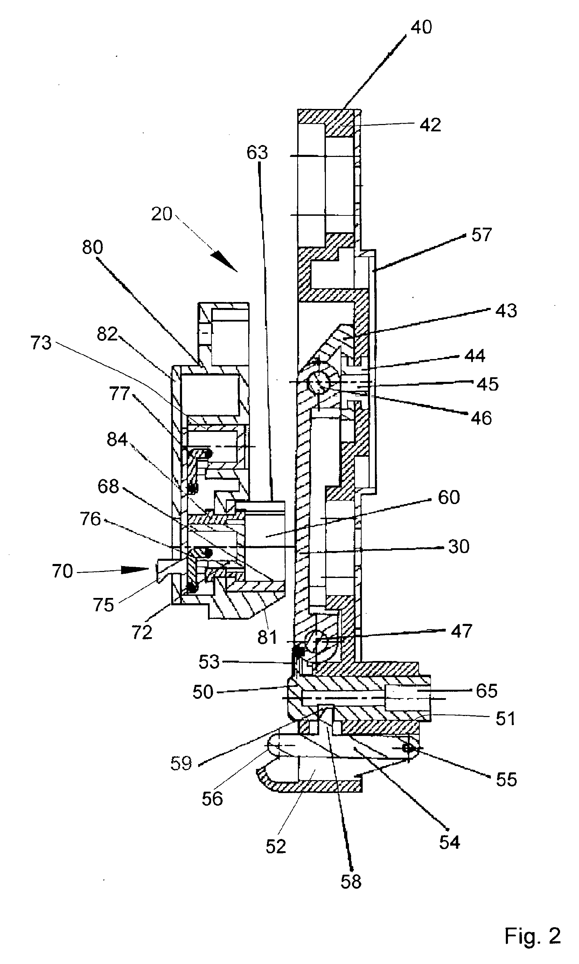

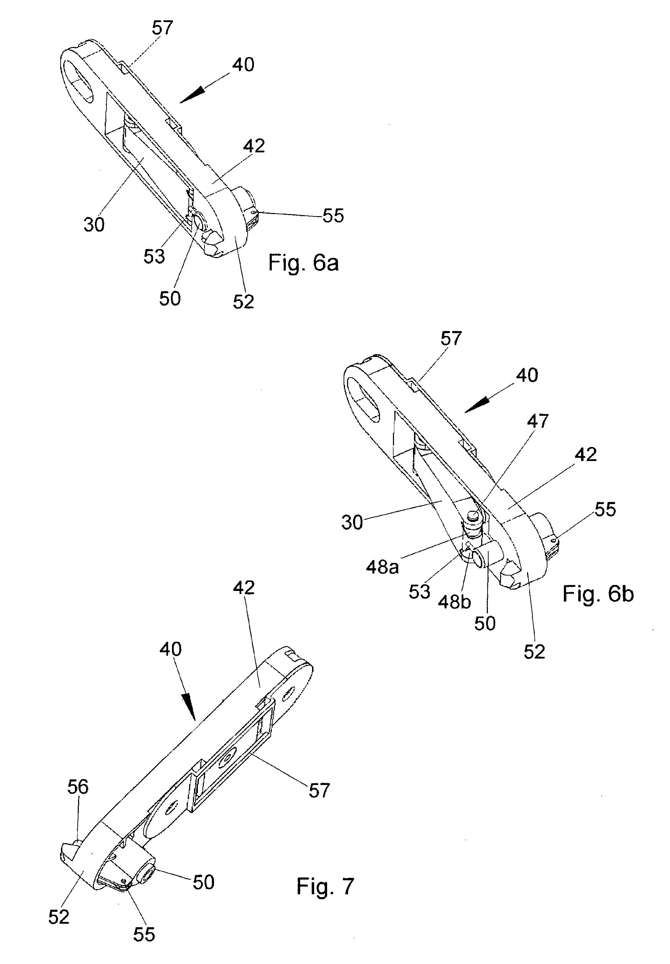

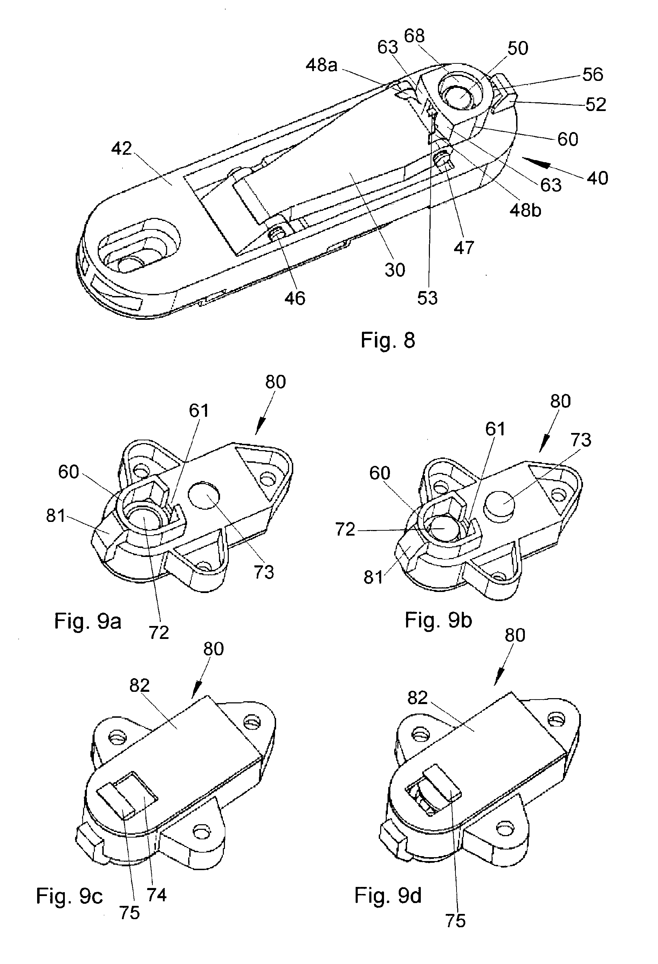

Der Aufbau des Schlosses 20 wird nun mehr ins Einzelne gehend unter Bezugnahme auf Fig. 2 beschrieben, welche das Schloss 20 als eine Einzelheit in vergrößerter Darstellung zeigt. Der Fallenträger 40 umfasst ein Gehäuse 42 aus glasfaserverstärktem Thermoplast. In dem Gehäuse 42 ist die Hauptfalle 30 schwenkbar gelagert und die Nebenfalle 50 verschiebbar gelagert. An dem Gehäuse 42 ist eine Tragkonsole 43 mittels eines Lagers 44 angebracht, das um eine Achse 45 schwenkbar ist. Die Tragkonsole 43 trägt eine Achse 46, auf welcher die als ein langgestrecktes Schwenkglied ausgebildete Hauptfalle 30 schwenkbar gelagert ist. Die Hauptfalle 30 ist an ihrem unteren Ende gegabelt. Die Gabelarme tragen eine Achse 47, auf welcher zwei Kegelrollen 48a, 48b (Fig. 6b und 8) drehbar gelagert sind. Die Hauptfalle 30 kann ebenfalls aus glasfaserverstärktem Thermoplast bestehen. Unterhalb des unteren Endes der Hauptfalle 30 hat das Gehäuse 42 eine Bohrung, in welcher die als ein zylindrischer Bolzen ausgebildete Nebenfalle 50 verschiebbar gelagert ist. An dem Gehäuse 42 ist an dem in Fig. 2 unteren Ende ein Wippengehäuse 52 ausgebildet. In dem Wippengehäuse 52 ist eine Wippe 54 um eine Achse 55 schwenkbar. Mit einem zu der Achse 55 entgegengesetzten Ende 56 steht die Wippe 54 aus dem Wippengehäuse 52 hervor. Die Wippe 54 hat an ihrer oberen Seite einen Dorn 58, der bei entriegeltem Schloss 20 in eine Ausnehmung 59 der Nebenfalle 50 eingreift. Der Dorn 58 ist auf seiner von der Achse 55 abgewandten Seite abgeschrägt, wie in Fig. 2 dargestellt. An seinem in Fig. 2 linken Ende trägt die Nebenfalle 50 einen stiftförmigen Mitnehmer 53, der bei entriegeltem Schloss 20 zwischen den Kegelrollen 48a, 48b an der Hauptfalle 30 anliegt. Das Gehäuse 42 ist auf seiner rechten Seite mit einer Zahnplatte 57 versehen, die zu Einstell- und Befestigungszwecken dient.

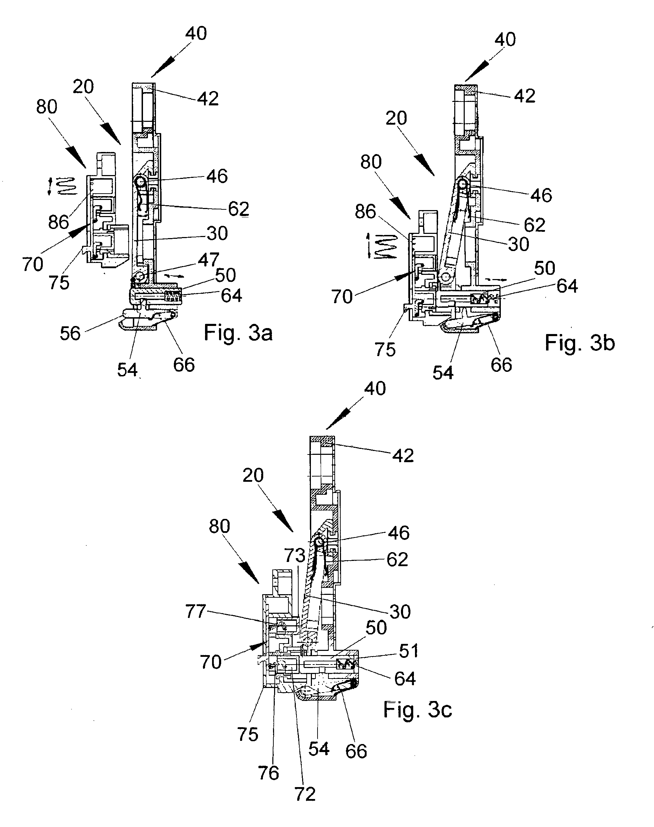

Der Fallenträger 40 ist zusätzlich mit mehreren Federn versehen, die der Übersichtlichkeit halber nur in den Fig. 3a - 3c gezeigt sind. Es handelt sich um eine Feder 62, die um die Achse 46 der Hauptfalle 30 angeordnet ist und zwei Arme aufweist, die sich an der Innenseite des Gehäuses 42 bzw. an der Innenseite der Hauptfalle 30 abstützen und bestrebt sind, die Hauptfalle 30 um die Achse 46 im Uhrzeigersinn zu verschwenken. Die verschwenkte Stellung, die in Fig. 3b gezeigt ist, wird weiter unten näher beschrieben. Weiter ist eine Feder 64 in einer Sackbohrung 65 der Nebenfalle 50 angeordnet. Es handelt sich um eine Druckfeder, die ihre Kraft zwischen dem Freilauf 106 und der Nebenfalle 50 entfaltet. Die Nebenfalle 50 ist so in den Fig. 2 und 3a in Richtung nach links vorgespannt. An einer Bewegung nach links ist sie gehindert, solange der Dorn 58 in die Ausnehmung 59 der Nebenfalle 50 eingreift. Die Wippe 54 ist ihrerseits in diese Stellung durch eine um ihre Achse 55 angeordnete Feder 66 vorgespannt. Die Feder 66 hat zwei Arme, die gegen die Innenseite des Wippengehäuses 52 bzw. gegen die Unterseite der Wippe 54 drücken, so dass die Wippe 54 bestrebt ist, mit ihrem Dorn 58 in die Ausnehmung 59 einzugreifen.

Die Drucktaste 102 ist zusätzlich mit einer Feder 67 versehen, die der Übersichtlichkeit halber nur in Fig. 1 a gezeigt ist. Die Feder 67 ist um ihre Schwenkachse 91 angeordnet und hat zwei Arme, die sich an der Innenseite eines Drucktastengehäuses 95 bzw. an der Innenseite der Drucktaste 102 abstützen und bestrebt sind, die Drucktaste 102 um die Achse 91 im Uhrzeigersinn zu verschwenken. Die Drucktaste 102 ist in ihrer gedrückten Stellung in Fig. 3b gezeigt.

Gemäß der Darstellung in Fig. 2, auf die nun wieder Bezug genommen wird, ist an dem unteren Ende des Verschlussgehäuses 80 eine Sperraufnahme 60 angebracht, bei der es sich gemäß der Darstellung in den Fig. 8, 9a und 9b um ein im Wesentlichen zylindrisches, oben abgeflachtes und mit einem Schlitz 61 versehenes Gebilde handelt, das mit dem Verschlussgehäuse 80 fest verbunden ist. Der Schlitz 61 dient zur Aufnahme des Mitnehmers 53, wenn die Nebenfalle 50 in Fig. 2 nach links und in eine Stellung bewegt wird, die in Fig. 3b gezeigt ist, während gleichzeitig die Hauptfalle 30 in Fig. 2 im Uhrzeigersinn um die Achse 46 verschwenkt wird, was beim Schließen der Gepäckbox erfolgt und weiter unten näher beschrieben ist. Beiderseits des Schlitzes 61 hat die Sperraufnahme 60 außen zwei Hauptschließflächen 63 (Fig. 8), mit denen die Hauptfalle 30 über ihre Kegelrollen 48a, 48b in formschlüssigen Eingriff gelangt, wenn sie wie vorstehend beschrieben im Uhrzeigersinn verschwenkt wird. Die Sperraufnahme 60 des Verschlussgehäuses 80 hat an ihrem inneren Umfang eine Nebenschließfläche 68, von der die Nebenfalle 50 in korrekt verriegelter Position Abstand hat, so dass ein Spalt 69 vorhanden ist (Fig. 4a). In mehr oder weniger korrekter Verriegelungsposition ist die Nebenfalle 50 durch diese Nebenschließfläche aber blockierbar. Die Hauptfalle 30 und die Nebenfalle 50 werden an bzw. in der Sperraufnahme 60 gemeinsam verriegelt. Eine Drehverriegelung der Nebenfalle 50 erfolgt mit dem Mitnehmer 53 in dem Schlitz 61 der Sperraufnahme 60. Die Nebenschließfläche 68 hat üblicherweise Abstand von der Nebenfalle 50.

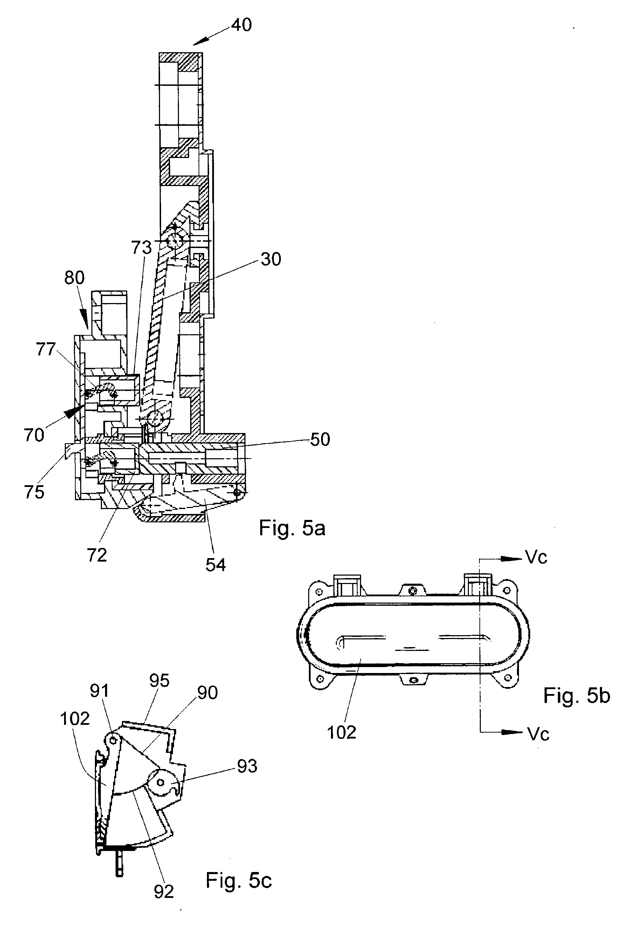

Zusätzlich enthält das Verschlussgehäuse 80 eine Notentriegelungseinrichtung, die insgesamt mit 70 bezeichnet ist. Diese umfasst zwei hohlzylindrische Notstifte 72, 73, die in zwei übereinander angeordneten Bohrungen verschiebbar gelagert sind. Die untere dieser beiden Bohrungen mündet in das Innere der Sperraufnahme 60. In Fig. 2 ist links von den Notstiften 72, 73 ein Schieber 74 angeordnet, der über einen Griff 75 manuell auf und ab verschiebbar ist. Der Schieber 74 trägt auf seiner in Fig. 2 rechten Seite zwei Winkelhebel 76, 77, die einenends an dem Schieber 74 angelenkt sind und anderenends an den Notstiften 72 bzw. 73. Wenn der Schieber 74 mit Hilfe des Griffes 75 in Fig. 2 nach oben bewegt wird, werden die Notstifte 72, 73 jeweils nach rechts in eine Notentriegelungsstellung bewegt, die in Fig. 3c und in Fig. 5a gezeigt ist. Das Verschlussgehäuse 80 ist auf seiner in Fig. 2 linken Seite durch einen Deckel 82 verschlossen. Der Griff 75 ragt von dem Schieber 74 aus durch eine Aussparung in dem Deckel 82 nach außen. Die untere Bohrung des Gehäuses 80, in welcher der Notstift 72 angeordnet ist, enthält einen Hohlniet 84, in dessen Bohrung der Notstift 72 verschiebbar ist. Der Hohlniet 84 dient zugleich zur Befestigung der Sperraufnahme 60 an dem Verschlussgehäuse 80, wie es in Fig. 2 zu erkennen ist. Eine nur in Fig. 3a angedeutete Druckfeder 86 belastet den Schieber 74 der Notentriegelungseinrichtung 70 in Richtung auf die in Fig. 2 gezeigte Bereitschaftsstellung derselben.

Nachdem der Aufbau des Schlosses 20 im Einzelnen beschrieben worden ist, wird nun noch der Aufbau des Betätigungsmechanismus 100 näher beschrieben, bevor anschließend das Verriegeln, Entriegeln und Notentriegeln des Schlosses im Einzelnen beschrieben werden.

Gemäß der Darstellung in Fig. 1 ist die Drucktaste 102 des Betätigungsmechanismus 100 über den Seilzug 104 und den Freilauf 106 mit der Nebenfalle 50 mechanisch gekoppelt. Die Koppelung selbst ist nicht dargestellt. Das Schloss 20 ist im nicht verriegelten Zustand gezeigt. In diesem Fall befindet sich die Drucktaste 102 in der gedrückten Stellung, die in Fig. 1a gezeigt ist und in der sie durch den Freilauf 106 gehalten wird, bis das Schloss 20 verriegelt wird. Sobald das Schloss 20 verriegelt ist, wie es in Fig. 4a gezeigt ist, nimmt die Drucktaste 102 die in Fig. 4a gezeigte Stellung ein. Diese Stellung nimmt die Drucktaste 102 nur ein, wenn die Hauptfalle 30 und die Nebenfalle 50 in der in Fig. 4a gezeigten Stellung und korrekt eingerastet sind.

An der Rückseite der Drucktaste 102 ist ein Sektorteil 90 befestigt, das an seiner kreisbogenförmigen äußeren Begrenzung eine Evolventenverzahnung 92 aufweist, welche in die Verzahnung eines drehbaren Betätigungselements 93 eingreift, an dessen Außenumfang der Seilzug 104 eingehängt ist, wie es in den Querschnittdarstellungen der Drucktaste 102 in den Fig. 1, 4c und 5c zu erkennen ist.

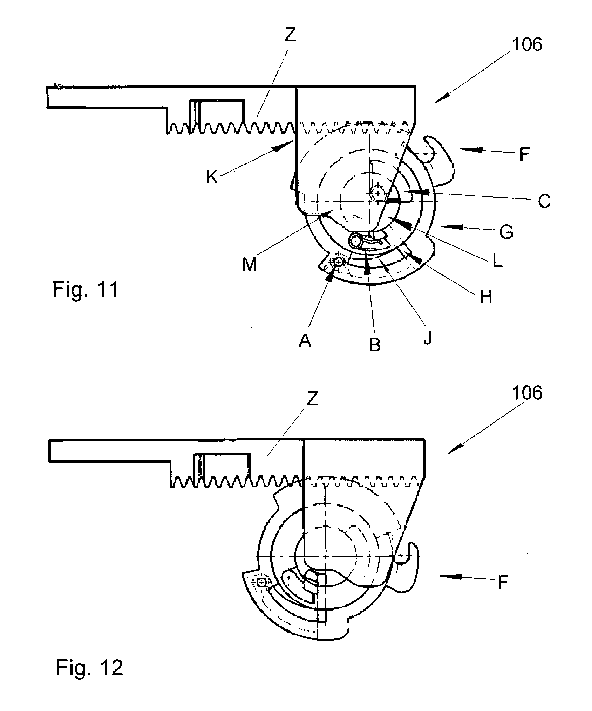

In den Fig. 11 und 12 ist der Freilauf 106 als eine Einzelheit in zwei Betriebsphasen gezeigt, und zwar in Fig. 11 bei verriegeltem Schloss 20 und in Fig. 12 bei geöffnetem Schloss 20. Der Freilauf 106 hat ein Antriebsrad F, welches durch den Seilzug 104 angetrieben wird. Zwischen dem Antriebsrad F und einem Mitnehmer J wird mittels eines Schiebers H eine Verbindung hergestellt. Der Mitnehmer J ist in einem Zahnrad G schwenkbar gelagert und wird durch eine Schenkelfeder A in Position gehalten. Der Schieber H wird mittels einer weiteren Schenkelfeder B in Richtung einer Hauptachse L gedrückt. Das Antriebsrad F wird mittels einer Schenkelfeder C in die Ausgangsposition gedrückt.

Nach Betätigung des Antriebsrades F wird eine Zahnstange Z über das Zahnrad G angetrieben und das Schloss 20 geöffnet. In offener Position (der W ippendorn 58 verriegelt die Zahnstange Z) verrastet der Schieber H das Antriebsrad F zur Hauptachse L. Die Drucktaste 102 wird durch den Sperrmechanismus (Wippe 54, Dorn 58, Nebenfalle 50) in dem Fallenträger 40 gedrückt gehalten. Die Drucktaste 102 bleibt solange gesperrt, bis beide Schlösser 20 vollständig eingerastet sind.

Beim Schließvorgang gibt der Wippendorn 58 die Zahnstange Z frei. Das Zahnrad G kann in die Ausgangsposition zurückdrehen, ohne das Antriebsrad F mitzunehmen. Durch Auflaufen einer Nocke K (diese sitzt an der Zahnstange Z) auf den Schieber H wird dieser entriegelt und das Antriebsrad F kann wieder in seine Ausgangsposition zurückdrehen.

Diese Ausbildung des Freilaufsystems ermöglicht eine getrennte Abfrage der beiden Schlösser der Gepäckbox 22. Die Drucktaste 102 zeigt solange ein offenes System an, bis beide Schlösser der Gepäckbox vollständig verriegelt sind.

Bei geöffneter Gepäckbox 22 ist die Drucktaste 102 in gedrückter Position. Erst beim Verriegeln der beiden Schlösser 20, also wenn alle vier Fallen 30, 50 eingerastet sind, wird die Drucktaste 102 in ihrer gedrückten Position entsperrt, so dass sie unter der Wirkung der Feder 67 in ihre Ausgangsposition zurückkehren kann, in der sie für den nächsten Entriegelungsvorgang bereit ist.

### Schließvorgang

Wenn der Deckel 28 aus der in Fig. 10 gezeigten Stellung, in welcher die Gepäckbox 22 geöffnet ist, um die Drehachse 26 nach oben geschwenkt wird, bewegt sich der Fallenträger 40 in Richtung zu dem stationären Verschlussgehäuse 80. Er bewegt sich dabei an dem Verschlussgehäuse 80 vorbei über die in Fig. 1 gezeigte Stellung hinaus, bis eine untere Anschlagfläche 81 des Verschlussgehäuses 80 die Wippe 54 berührt und um die Achse 55 in Fig. 2 nach unten schwenkt, wobei der Dorn 58 aus der Ausnehmung 59 der Nebenfalle 50 herausgezogen wird. Unter der Kraft der Feder 64 (Fig. 3) bewegt sich nun die Nebenfalle 50 in Fig. 2 nach links. Die durch die Feder 62 vorgespannte Hauptfalle 30, die nun nicht länger durch den Mitnehmer 53 der Nebenfalle 50 zurückgehalten wird, wird jetzt im Uhrzeigersinn um die Achse 46 verschwenkt. Es bewegen sich nun die Hauptfalle 30 und die Nebenfalle 50 aus ihrer in Fig. 3a gezeigten Stellung in ihre in Fig. 3b gezeigte Stellung, in welcher das untere Ende der Hauptfalle 30 mit den Kegelrollen 48a, 48b die Hauptschließflächen 63 der Sperraufnahme erfasst und die Nebenfalle 50 in die Sperraufnahme 60 einfasst und an dem Notstift 72 anliegt. Die Federn 62 und 64 halten die Hauptfalle 30 bzw. die Nebenfalle 50 in der in Fig. 3b gezeigten Position, in welcher das Schloss 20 korrekt verriegelt ist.

Die Hauptfalle 30 schließt formschlüssig und die Nebenfalle 50 schließt mit einem umlaufenden Spalt 69 (also berührungslos). Zum einen wird der Spalt 69 benötigt, um einer Überbestimmung vorzubeugen, zum anderen können so durch verminderte Reibung die Bedienkräfte gering gehalten werden. Das bedeutet, das Schloss 20 gilt erst als vollständig verriegelt, wenn die beiden Fallen 30, 50 in Verriegelungsposition sind. Wenn jetzt z.B. die Hauptfalle 30 versagt, kann der Deckel 28 sich nur um die Breite des Spalts 68 bewegen, also bis die Nebenfalle 50 an der Nebenschließfläche 68 anliegt. Der Deckel 28 bleibt so trotz Versagens der Hauptfalle 30 geschlossen. Ein Verriegeln mit nur einem Element, Hauptfalle 30 oder Nebenfalle 50, ist außer im Versagensfall nicht zulässig.

### Entriegelung

Zum Entriegeln des Schlosses 20 wird die Drucktaste 102 gedrückt, wobei sie aus der in Fig. 4c gezeigten Stellung in die in Fig. 1 a gezeigte Stellung bewegt wird. Dabei wird das Betätigungselement 93 im Uhrzeigersinn verschwenkt, so dass der Seilzug 104 über den Freilauf 106 die Nebenfalle 50 aus der in Fig. 4a gezeigten Stellung in die in den Fig. 1 und 2 gezeigte Stellung zurückzieht. Bei diesem Vorgang drückt der Mitnehmer 53 gegen das untere Ende der Hauptfalle 30, so dass diese um die Achse 46 im Gegenuhrzeigersinn in die in den Fig. 1 und 2 gezeigte Stellung verschwenkt wird. Sobald diese Stellung erreicht wird, ist die unter der Vorspannung der Feder 56 stehende Wippe 54 in der Lage, ihren Dorn 58 in die Ausnehmung 59 der Nebenfalle 50 einzuführen und diese wieder in ihrer Ausgangsstellung zu verriegeln, in welcher das Schloss 20 entriegelt ist.

### Notentriegelung

Falls die Drucktaste 102 nicht zugänglich oder nicht funktionsfähig ist, kann das Schloss 20 über die Notentriegelungseinrichtung 70 entriegelt werden. Es sei angenommen, dass sich das Schloss 20 in der in Fig. 3b gezeigten Verriegelungsstellung befindet. Zum Notentriegeln wird der Griff 75 manuell nach oben geschoben. Dabei werden die beiden Winkelhebel 76 und 77 im Uhrzeigersinn verschwenkt, so dass sie die Notstifte 72, 73 in Fig. 3b nach rechts schieben. Der untere Notstift 72 drückt die Nebenfalle 50 nach rechts. Der obere Notstift 73 drückt die Hauptfalle 30 nach rechts, bis diese schließlich in ihre in Fig. 3 gezeigte Stellung gelangen, in welcher die Hauptfalle 30 und die Nebenfalle 50 nicht länger in die Sperraufnahme 60 einfassen, so dass nun der Behälter 24 der Gepäckbox 22 geöffnet werden kann. Die Bewegung der Notstifte 72, 73 ist in den Fig. 9a und 9b zu erkennen. In Fig. 9a befinden sich die Notstifte 72, 73 noch in ihrer in Fig. 2 gezeigten Ausgangsposition. In Fig. 9b befinden sie sich in ihrer in Fig. 3c gezeigten Notentriegelungsposition.

### Bezugszeichenliste

- 20: Schloss
- 22: Gepäckbox
- 24: Behälter
- 25: Seitenwand
- 26: Drehachse
- 28: Deckel
- 29: Seitenwand
- 30: Hauptfalle
- 40: Fallenträger
- 42: Gehäuse
- 43: Tragkonsole
- 44: Lager
- 45: Achse
- 46: Achse
- 47: Achse
- 48a: Kegelrolle
- 48b: Kegelrolle
- 50: Nebenfalle
- 51: Bohrung
- 52: Wippengehäuse
- 53: Mitnehmer
- 54: Wippe
- 55: Achse
- 56: Ende
- 57: Zahnplatte
- 58: Dorn
- 59: Ausnehmung
- 60: Sperraufnahme
- 61: Schlitz
- 62: Feder
- 63: Hauptschließfläche
- 64: Feder
- 65: Sackbohrung
- 66: Feder
- 67: Feder
- 68: Nebenschließfläche
- 69: Spalt
- 70: Notentriegelungseinrichtung
- 72: Notstift
- 73: Notstift
- 74: Schieber
- 75: Griff
- 76: Winkelhebel
- 77: Winkelhebel
- 80: Verschluss- oder Keepergehäuse
- 81: Anschlagfläche
- 82: Deckel
- 84: Hohlniet
- 86: Druckfeder
- 90: Sektorteil
- 91: Schwenkachse
- 92: Evolventenverzahnung
- 93: Betätigungselement
- 95: Drucktastengehäuse
- 100: Betätigungsmechanismus
- 102: Drucktaste
- 104: Seilzug
- 106: Freilauf

- A: Schenkelfeder
- B: Schenkelfeder
- C: Schenkelfeder
- F: Antriebsrad
- G: Zahnrad
- H: Schieber
- J: Mitnehmer
- L: Hauptachse
- Z: Zahnstange

## Patentansprüche

1. Schloss (20) für eine Gepäckbox (22), insbesondere in der Kabine eines Flugzeuges,
wobei die Gepäckbox (22) mit einem Deckel (28) verschließbar ist, der um eine Drehachse (26) beweglich ist,
mit einem Fallenträger (40), der wenigstens eine Hauptfalle (30) trägt, mit einem Verschlussgehäuse (80) zum Erfassen von wenigstens der Hauptfalle (30) zur Verriegelung des Schlosses (20),
wobei von der Gepäckbox (24) und dem Deckel (28) eine oder einer den Fallenträger (40) und der oder die andere das Verschlussgehäuse (80) empfängt oder trägt, und
mit einem mit dem Schloss (20) verbindbaren oder verbundenen, manuell betätigbaren Betätigungsmechanismus (100) zum Lösen der Hauptfalle (30) aus dem Verschlussgehäuse (80) zur Entriegelung des Schlosses (20),
wobei die Hauptfalle (30) in dem Fallenträger (40) schwenkbar gelagert ist und in verriegelter Stellung des Schlosses (20) in eine Sperraufnahme (60) des Verschlussgehäuses (80) einfasst und an einer Hauptschließfläche (63) derselben anliegt,
wobei an dem Fallenträger (40) weiter eine Nebenfalle (50) gelagert ist, welche in verriegelter Stellung des Schlosses (20) durch eine an dem Verschlussgehäuse (80) ausgebildete Nebenschließfläche (68) auch in einer gegenüber der Hauptschließfläche (63) mehr oder weniger korrekten Verriegelungsposition blockierbar ist, und
wobei die Hauptfalle (30) in der Sperraufnahme (60) des Verschlussgehäuses (80) formschlüssig schließt, hingegen die Nebenfalle (50) mit einem Spalt (69),
**dadurch gekennzeichnet, dass** die Nebenfalle (50) in dem Fallenträger (40) verschiebbar gelagert ist und in dem Verschlussgehäuse (80) mit einem umlaufenden Spalt (69) schließt und
dass der Nebenfalle (50) eine Wippe (54) mit einem Dorn (58) zugeordnet ist, der in entriegeltem Zustand des Schlosses (20) in eine Ausnehmung (59) in der Nebenfalle (50) eingreift, so dass in dem entriegelten Zustand des Schlosses (20) die Nebenfalle (50) formschlüssig in dem Fallenträger (40) zurückgehalten wird, andererseits aber bei dem Schließen der Gepäckbox (22) die Wippe (54) zwangsläufig durch das Verschlussgehäuse (80) betätigt und somit die Nebenfalle (50) entriegelt wird, aber erst dann, wenn sich das Verschlussgehäuse (80) und der Fallenträger (40) in einer Position zueinander befinden, in der beide Fallen (30, 50) verriegeln können.

2. Schloss (20) nach Anspruch 1, **dadurch gekennzeichnet, dass** durch Betätigen einer Notentriegelungseinrichtung (70) die Hauptfalle (30) und die Nebenfalle (50) in Stellungen verschiebbar sind, in denen das Schloss (20) entriegelt ist.

3. Schloss (20) nach Anspruch 1 oder 2, **dadurch gekennzeichnet, dass** die Hauptfalle (30) und die Nebenfalle (50) durch Federn (62, 64) in Richtung von Stellungen vorgespannt sind, in denen das Schloss (20) verriegelt ist.

4. Schloss (20) nach einem der vorhergehenden Ansprüche, **dadurch gekennzeichnet, dass** zum manuellen Entriegeln des Schlosses (20) der Betätigungsmechanismus (100) einen Seilzug (104) aufweist, der mit der Hauptfalle (30) und der Nebenfalle (50) koppelbar oder gekoppelt ist.

5. Schloss (20) nach Anspruch 4, **dadurch gekennzeichnet, dass** der Seilzug (104) auf der von dem Schloss (20) oder von jedem Schloss des Behälters (24) abgewandten Seite mit einer Drucktaste (102) verbunden ist, an deren Stellung der Ent- oder Verriegelungszustand des oder jedes Schlosses (20) des Behälters (24) erkennbar ist.

6. Schloss (20) nach Anspruch 5, **dadurch gekennzeichnet, dass** zwischen jedem Schloss (20) des Behälters (24) und der Drucktaste (102) ein Freilaufmechanismus (106) angebracht ist.

## Claims

1. Lock (20) for a luggage compartment (22), in particular in the cabin of an aircraft, the luggage compartment (22) being closable by means of a lid (28) which is movable about an axis of rotation (26), said lock comprising a catch support (40), which supports at least one main catch (30), comprising a lock casing (80) for engaging at least the main catch (30) in order to lock the lock (20), one of the luggage compartment (24) and the lid (28) receiving or supporting the catch support (40) and the other receiving or supporting the lock casing (80), and comprising a manually actuable actuation mechanism (100), which can be or is connected to the lock (20), for releasing the main catch (30) from the lock casing (80) in order to release the lock (20), the main catch (30) being pivotally mounted in the catch support (40) and, in the locked position of the lock (20), engaging in a catching receiver (60) of the lock casing (80) and resting on a main closure face (63) thereof, an auxiliary catch (50) additionally being mounted on the catch support (40), which catch, in the locked position of the lock (20), can also be blocked in a more or less correct locking position relative to the main closure face (63) by means of an auxiliary closure face (68) formed on the lock casing (80), and the main catch (30) fitting interlockingly in the catching receiver (60) of the lock casing (80) whereas the auxiliary catch, by contrast, has a gap (69), **characterised in that** the auxiliary catch (50) is displaceably mounted in the catch support (40) and fits in the lock casing (80) with a circumferential gap (69) and **in that** the auxiliary catch (50) is assigned a rocking bar (54) comprising a pin (58) which engages in a recess (59) in the auxiliary catch (50) when the lock (20) is released so that when the lock (20) is released, the auxiliary catch (50) is retained interlockingly in the catch support (40) whereas, conversely, when the luggage compartment (22) is closed, the rocking bar (54) is necessarily actuated by the lock casing (80) and thus the auxiliary catch (50) is released, but only when the lock casing (80) and the catch support (40) are in a position relative to each other in which both catches (30, 50) can lock.

2. Lock (20) according to claim 1, **characterised in that** by actuating an emergency release means (80), the main catch (30) and the auxiliary catch (50) can be displaced into positions in which the lock (20) is released.

3. Lock (20) according to either claim 1 or claim 2, **characterised in that** the main catch (30) and the auxiliary catch (50) are biased by springs (62, 64) towards positions in which the lock (20) is locked.

4. Lock (20) according to any of the preceding claims, **characterised in that**, for manual release of the lock (20), the actuation mechanism (100) comprises a cable control (104) which can be or is coupled to the main catch (30) and the auxiliary catch (50).

5. Lock (20) according to claim 4, **characterised in that** the cable control (104) on the side facing away from the lock (20) or from each lock of the container (24) is connected to a push button (102), the position thereof indicating whether the or each lock (20) of the container (24) is released or locked.

6. Lock (20) according to claim 5, **characterised in that** a freewheeling mechanism (106) is mounted between each lock (20) of the container (24) and the push button (102).

## Revendications

1. Serrure (20) pour un caisson à bagages (22) en particulier dans la cabine d'un avion,
ce caisson à bagages (22) pouvant être fermé par un couvercle (28) mobile autour d'un axe de rotation (26), comportant
un support de pêne (40) qui porte au moins un pêne principal (30),
un boitier de fermeture (80) pouvant recevoir le pêne principal (30) pour verrouiller la serrure (20),
parmi le caisson à bagages (24) et le couvercle (28), l'un de ces éléments reçoit ou porte le support de pêne (40) tandis que l'autre reçoit ou porte le boitier de fermeture (80), et
un mécanisme d'actionnement (100) actionnable manuellement relié ou pouvant être relié à la serrure (20) pour extraire le pêne principal (30) du boitier de fermeture (80) de façon à déverrouiller la serrure (20),
le pêne principal (30) étant logé pivotant dans le support de pêne (40), et étant introduit dans la position verrouillée de la serrure (20) dans un logement de blocage (60) du boitier de fermeture (80) et s'appliquant contre une surface de fermeture principale (63) de ce boitier,
sur le support de pêne (40) étant en outre logé un pêne auxiliaire (50), qui dans la position verrouillée de la serrure (20) peut également être bloqué dans une position de verrouillage plus ou moins correcte par rapport à la surface de fermeture principale (63) par une surface de fermeture auxiliaire (68) réalisée sur le boitier de fermeture (80), et
le pêne principal (30) assurant la fermeture dans le logement de blocage (60) du boitier de fermeture (80) par une liaison par la forme alors que le pêne auxiliaire (50) laisse subsister une fente (69),
**caractérisée en ce que**
le pêne auxiliaire (50) est logé pivotant dans le support de pêne (40) et assure la fermeture dans le boitier de fermeture (80) avec une fente périphérique (69), et
au pêne auxiliaire (50) est associée une bascule (54) comportant un goujon (58) qui, à l'état déverrouillé de la serrure (20) vient en prise dans un évidement (59) réalisé dans le pêne auxiliaire (50) de sorte que, à l'état déverrouillé de la serrure (20) le pêne auxiliaire (50) soit maintenu par une liaison par la forme dans le support de pêne (40), mais qu'en revanche, lors de la fermeture du caisson à bagages (22) la bascule (54) soit automatiquement actionnée par le boitier de fermeture (80) et qu'ainsi le pêne auxiliaire (50) soit déverrouillé, ce toutefois seulement lorsque le boitier de fermeture (80) et le support de pêne (40) se trouvent dans une position relative dans laquelle les deux pênes (30, 50) peuvent être verrouillés.

2. Serrure (20) conforme à la revendication 1,
**caractérisée en ce que**
l'actionnement d'un dispositif de déverrouillage de secours (70) permet de déplacer le pêne principal (30) et le pêne auxiliaire (50) dans des positions dans lesquelles la serrure (20) est déverrouillée.

3. Serrure (20) conforme à la revendication 1 ou 2,
**caractérisée en ce que**
le pêne principal (30) et le pêne auxiliaire (50) sont rappelés par des ressorts (62, 64) vers des positions dans lesquelles la serrure (20) est verrouillée.

4. Serrure (20) conforme à l'une des revendications précédentes,
**caractérisée en ce que**
pour permettre le déverrouillage manuel de la serrure (20), le mécanisme d'actionnement (100) comporte un câble de transmission (104) accouplé ou pouvant être accouplé au pêne principal (30) et au pêne auxiliaire (50).

5. Serrure (20) conforme à la revendication 4,
**caractérisée en ce que**
sur son côté situé à l'opposé de la serrure (20) ou de chacune des serrures du caisson (24), le câble de transmission (104) est relié à un bouton poussoir (102) dont la position permet de constater l'état déverrouillé ou verrouillé de la serrure ou de chacune des serrures (20) du caisson (24).

6. Serrure (20) conforme à la revendication 5,
**caractérisée en ce qu'**
un mécanisme à roue libre (106) est monté entre chacune des serrures (20) du caisson (24) et le bouton poussoir (102).
